# EUROPEAN PATENT SPECIFICATION

(11) **EP 2 209 845 B1**
(45) Date of publication and mention of the grant of the patent: **18.05.2011**
(21) Application number: 08850469.1
(22) Date of filing: 13.11.2008
(51) Int. Cl.: C08K 3/00, C08K 7/00, C08K 13/00

(54) **THERMALLY CONDUCTIVE PLASTIC RESIN COMPOSITION**
WÄRMELEITFÄHIGE KUNSTSTOFFHARZZUSAMMENSETZUNG
COMPOSITION DE RÉSINE PLASTIQUE THERMOCONDUCTRICE

(30) Priority: 16.11.2007 US 3556 P
(43) Date of publication of application: 28.07.2010
(73) Proprietor: E. I. du Pont de Nemours and Company, Wilmington, DE 19898 (US)
(72) Inventor: SAGA, Yuji, Utsunomiya-shi Tochigi 321-3231 (JP)
(74) Representative: Heinemann, Monica
(86) International application number: PCT/US2008/083389
(87) International publication number: WO 2009/064873

(56) References cited:
- WO-A-01/96458
- WO-A-2005/071001
- WO-A-2006/135840
- DATABASE WPI Week 200349 Thomson Scientific, London, GB; AN 2003-516548 XP002513603 & JP 2003 040619 A (HITACHI KINZOKU SHOJI KK) 13 February 2003 (2003-02-13)

## Description

### Field of the Invention

Thermally conductive plastic resin compositions comprising polymer and combination of calcium fluoride with glass flake are useful as encapsulant compositions.

### Background of the Invention

Because of their excellent mechanical and electrical insulation properties, polymeric resin compositions are used in a broad range of applications such as in automotive parts, electrical and electronic parts, machine parts and the like. In many cases, because of the design flexibility they permit, sealing capability and their electrical insulation properties, polymer resin compositions can be used as encapsulants for electrical and electronics devices or motors. However, not only are electrical insulation properties needed in the encapsulating polymer compositions, but they also often need to have higher thermal conductivities especially with the downsizing trend of some electrical devices. Another important requirement for encapsulating polymer compositions is that their Coefficients of Linear Thermal Expansions (CLTEs) should be close to CLTEs of materials encapsulated with the polymer compositions to retain seal integrity while releasing heat generated by the encapsulated devices. In general, higher loading with thermally conductive filler in polymer leads to higher thermal conductivity and lower CLTE because the fillers' CLTEs are often lower than polymers' CLTEs. However, high filler loadings often decreases flow-ability of polymer compositions in melt forming processes, and that can lead to failure of sealing performance or damage of core devices encapsulated with the polymer compositions. Thus, a thermally conductive, electrically insulating, low CLTE polymer composition with good flow-ability is desired.

Japanese patent application publication 2003-040619 discloses a method of surface treating calcium fluoride powder with a silane coupling agent and blending the coated powder with thermoplastic resins and, optionally, fillers to produce a thermally conductive composition. However, there is no mention of a way to achieve both thermal conductivity and low CLTE without significant increase of viscosity of the polymer compositions.

WO 2005071001 discloses a polymer composition comprising thermoplastic Polymer and calcium fluoride and fibrous filler. However use of fibrous filler leads to anisotropy in mold shrinkage and in thermal conductivity between flow direction and transverse direction due to orientation of the fibrous filler.

### Summary of the Invention

A thermally conductive polymer composition, comprising:
(a) 25 to 75 volume percent of one or more polymers,
(b) 7 to about 65 volume percent of calcium fluoride
(c) 2 to 50 volume percent of glass flake, and the volume ratio of (c) to (b) is between 10 to 90 and 70 two 30; and
the percentages being based on the total volume of the composition.

### Detailed Description of the Invention

The composition of the present invention comprises (a) at least one polymer, (b) calcium fluoride, (c) glass flake, and optionally (d) at least one Polymeric toughening agent.
(a) The polymer is the polymer matrix of the composition, in other words the one or more polymers are the continuous phase. Useful thermoplastic polymers include polycarbonates, polyolefins such as polyethylene and polypropylene, polyacetals, acrylics, vinyls, fluoropolymers, polyamides, polyesters, polysulfones, polyphenylene sulfides, liquid crystal polymers such as aromatic polyesters, polyetherimides, polyamideimides, polyacetals, polyphenylene oxides, polyarylates, polyetheretherketones (PEEK), polyetherketoneketones (PEKK) and syndiotactic polystyrenes, and blends thereof

Alternatively, thermosetting polymers such as epoxies, polyimides, silicones, unsaturated polyester and polyurethanes can be used as component (a).

Preferred are thermoplastic polymers and polyesters, polyamides, and liquid crystal polymers (LCPs) are especially preferred.

More preferred thermoplastic polyesters include polyesters having an inherent viscosity of 0.3 or greater and that are, in general, linear saturated condensation products of diols and dicarboxylic acids, or reactive derivatives thereof. Preferably, they will comprise condensation products of aromatic dicarboxylic acids having 8 to 14 carbon atoms and at least one diol selected from the group consisting of neopentyl glycol, cyclohexanedimethanol, 2,2-dimethyl-1,3-propane diol and aliphatic glycols of the formula HO(CH₂)ₙOH where n is an integer of 2 to 10. Up to 20 mole percent of the diol may be an aromatic diol such as ethoxylated bisphenol A, sold under the tradename Dianol® 220 by Akzo Nobel Chemicals, Inc., hydroquinone; biphenol; or bisphenol A. Up to 50 mole percent of the aromatic dicarboxylic acids can be replaced by at least one different aromatic dicarboxylic acid having from 8 to 14 carbon atoms, and/or up to 20 mole percent can be replaced by an aliphatic dicarboxylic acid having from 2 to 12 carbon atoms. Copolymers may be prepared from two or more diols or reactive equivalents thereof and at least one dicarboxylic acid or reactive equivalent thereof or two or more dicarboxylic acids or reactive equivalents thereof and at least one diol or reactive equivalent thereof. Difunctional hydroxy acid monomers such as hydroxybenzoic acid or hydroxynaphthoic acid or their reactive equivalents may also be used as comonomers.

Preferred polyesters include poly(ethylene terephthalate) (PET), poly(1,4-butylene terephthalate) (PBT), poly(1,3-propylene terephthalate) (PPT), poly(1,4-butylene2,6-naphthalate) (PBN), poly(ethylene2,6-naphthalate) (PEN), poly(1,4-cyclohexylene dimethylene terephthatate) (PCT), and copolymers and mixtures of the foregoing. Also preferred are 1,4-cyclohexylene dimethylene terephthalate/isophthalate copolymer and other linear homopolymer esters derived from aromatic dicarboxylic acids, including isophthalic acid; bibenzoic acid; naphthalenedicarboxylic acids including the 1,5-; 2,6-; and '2,7-naphthalenedicarboxylic acids; 4,4'-diphenylenedicarboxylic acid; bis(*p-*carboxyphenyl) methane; ethylene-bis-*p-*benzoic acid; 1,4-tetramethylene bis(*p*-oxybenzoic) acid, ethylene bis(*p-*oxybenzoic) acid, 1,3-trimethylene bis(*p*-oxybenzoic) acid; and 1,4-tetramethylene bis(*p*-oxybenzoic) acid, and glycols selected from the group consisting of 2,2-dimethyl-1,3-propane diol; neopentyl glycol; cyclohexane dimethanol; and aliphatic glycols of the general formula HO(CH₂)ₙOH where n is an integer from 2 to 10, e.g., ethylene glycol; 1,3-trimethylene glycol; 1,4-tetramethylene glycol;-1,6-hexamethylene glycol; 1,8-octamethylene glycol; 1,10-decamethylene glycol; 1,3-propylene glycol; and 1,4-butylene glycol. Up to 20 mole percent, as indicated above, of one or more aliphatic acids, including adipic, sebacic, azelaic, dodecanedioic acid or 1,4-cyclohexanedicarboxylic acid can be present. Also preferred are copolymers derived from 1,4-butanediol, ethoxylated bisphenol A, and terephthalic acid or reactive equivalents thereof. Also preferred are random copolymers of at least two of PET, PBT, and PPT, and mixtures of at least two of PET, PBT, and PPT, and mixtures of any of the forgoing.

The thermoplastic polyester may also be in the form of copolymers that contain poly(alkylene oxide) soft segments (blocks). The poly(alkylene oxide) segments are present in about 1 to about 15 parts by weight per 100 parts per weight of thermoplastic polyester. The poly(alkylene oxide) segments have a number average molecular weight in the range of about 200 to about 3,250 or preferably, in the range of about 600 to about 1,500. Preferred copolymers contain poly(ethylene oxide) and/or poly(tetramethylenether glycol) incorporated into a PET or PBT chain. Methods of incorporation are known to those skilled in the art and can include using the poly(alkylene oxide) soft segment as a comonomer during the polymerization reaction to form the polyester. PET may be blended with copolymers of PBT and at least one poly(alkylene oxide). A poly(alkylene oxide) may also be blended with a PET/PBT copolymer. The inclusion of a poly(alkylene oxide) soft segment into the polyester portion of the composition may accelerate the rate of crystallization of the polyester.

Preferred polyamides include polyamide 6, polyamide 66, polyamide 612, polyamide 610, or other aliphatic polyamides and semi-aromatic polyamides, such as those derived from terephthalic acid and/or isophthalic acid. Examples include polyamides 9T; 10T; 12T; polyamides derived from hexamethylenediamine, adipic acid, and terephthalic acid; and polyamides derived from hexamethylenediamine, 2-methylpentamethylenediamine, and terephthalic acid. Blends of two or more polyamides may be used.

Polyacetals are another preferred type of polymer. Polyacetals can be either one or more homopolymers, copolymers, or a mixture thereof. Homopolymers are prepared by polymerizing formaldehyde or formaldehyde equivalents, such as cyclic oligomers of formaldehyde. Copolymers can contain one or more comonomers generally used in preparing polyoxymethylene compositions. Commonly used comonomers include alkylene oxides of 2-12 carbon atoms. If a copolymer is selected, the quantity of comonomer will not be more than 20 weight percent, preferably not more than 15 weight percent, and most preferably about two weight percent. Preferable comonomers are ethylene oxide and butylene oxide, and preferable polyoxymethylene copolymers are copolymers of formaldehyde and ethylene oxide or butylene oxide where the quantity of ethylene oxide or butylene oxide is about two (2) weight percent. It is also preferred that the homo- and copolymers are: 1) those whose terminal hydroxy groups are end-capped by a chemical reaction to form ester or ether groups, or, 2) copolymers that are not completely end-capped, but that have some free hydroxy ends from the comonomer unit. Preferred end groups, in either case, are acetate and methoxy.

By a LCP is meant a polymer that is anisotropic when tested using the TOT test or any reasonable variation thereof, as described in U.S. Patent 4,118,372, which is hereby included by reference. Useful LCPs include polyesters, poly(ester-amides), and poly(ester-imides). One preferred form of LCP is "all aromatic", that is all of the groups in the polymer main chain are aromatic (except for the linking groups such as ester groups), but side groups which are not aromatic may be present.

The polymer (a) will preferably be present in about 25 to about 75 volume percent, or more preferably about 30 to about 60 volume percent, based on the total volume of the Composition.

The shape of calcium fluoride (b) is usually spherical or granular. The particles or granules can have a broad particle size distribution. Preferably, maximum particle size is less than 300 µm, and more preferably less than 200 µm. Preferably, average particle size is between 5 µm to 100 µm, and more preferably, between 15 µm to 60 µm. The particles or granules which have multi-modal size distribution in their particle size can also be used.

The surface of the calcium fluoride can be modified with other material to improve properties of the compositions. For example, a coupling agent such as aminosilanes and epoxysilanes to improve mechanical strength and flowability of the compositions, and a coating agent such as silicon to improve water resistance of the fillers.

The calcium fluoride (b) will preferably be present in 7 to 65 volume percent, more preferably 25 to 55 volume percent, based on the total volume of the composition.

The glass flakes used as component (c) in the present invention can be modified with other material to increase properties of the compositions. For example, a coupling agent such as aminosilanes and epoxysilanes to improve mechanical strength of the compositions, a coating agent such as silicon to improve water resistance of the fillers, and coating with ceramics to improve thermal conductivity.

Component (c) will preferably be present in 2 to 50 volume percent, or more preferably 5 to 30 volume percent, based on the total volume of the composition.

The volume ratio of (c)/(b) is between 10/90 and 70/30, or preferably between 15/85 and 50/50, more preferably between 15/85 and 35/65.

The polymeric toughening agent optionally used as component (d) in the present invention is any toughening agent that is effective for the polymer used. When the thermoplastic polymer is a polyester, the toughening agent will typically be an elastomer or has a relatively low melting point, generally <200°C, preferably <150°C and that has attached to it functional groups that can react with the thermoplastic polyester (and optionally other polymers present). Since thermoplastic polyesters usually have carboxyl and hydroxyl groups present, these functional groups usually can react with carboxyl and/or hydroxyl groups. Examples of such functional groups include epoxy, carboxylic anhydride, hydroxyl (alcohol), carboxyl, and isocyanate. Preferred functional groups are epoxy, and carboxylic anhydride, and epoxy is especially preferred. Such functional groups are usually "attached" to the polymeric toughening agent by grafting small molecules onto an already existing polymer or by copolymerizing, a monomer containing the desired functional group when the polymeric tougher molecules are made by copolymerization. As an example of grafting, maleic anhydride may be grafted onto a hydrocarbon rubber using free radical grafting techniques. The resulting grafted polymer has carboxylic anhydride and/or carboxyl groups attached to it. An example of a polymeric toughening agent wherein the functional groups are copolymerized into the polymer is a copolymer of ethylene and a (meth)acrylate monomer containing the appropriate functional group. By (meth)acrylate herein is meant the compound may be either an acrylate, a methacrylate, or a mixture of the two. Useful (meth)acrylate functional compounds include (meth)acrylic acid, 2-hydroxyethyl (meth)acrylate, glycidyl (meth)acrylate, and 2-isocyanatoethyl (methacrylate. In addition to ethylene and a functional (meth)acrylate monomer, other monomers may be copolymerized into such a polymer, such as Vinyl acetate, unfunctionalized (meth)acrylate esters such as ethyl (meth)acrylate, *n*-butyl (meth)acrylate, and cyclohexyl (meth)acrylate. Preferred toughening agents include those listed in U.S. Patent 4,753,980, which is hereby included by reference. Especially preferred toughening agents are copolymers of methylene, ethyl acrylate or *n-*butyl acrylate, and glycidyl methacrylate.

It is preferred that the polymeric toughening agent used with thermoplastic polyesters contain about 0.5 to about 20 weight percent of monomers containing functional groups, preferably about 1.0 to about 15 weight percent, more preferably about 7 to about 13 weight percent of monomers containing functional groups. There may be more than one type of functional monomer present in the polymeric toughening agent. It has been found that toughness of the composition is increased by increasing the amount of polymeric toughening agent and/or the amount of functional groups. However, these amounts should preferably not be increased to the point that the composition may crosslink, especially before the final part shape is attained.

The polymeric toughening agent used with thermoplastic polyesters may also be thermoplastic acrylic polymers that are not copolymers of ethylene. The thermoplastic acrylic polymers are made by polymerizing acrylic acid, acrylate esters (such as methyl acrylate, *n*-propyl acrylate, isopropyl acrylate, *n-*butyl acrylate, *n-*hexyl acrylate, and *n*-octyl acrylate), methacrylic acid, and methacrylate esters (such as methyl methacrylate, *n-*propyl methacrylate, isopropyl methacrylate, *n*-butyl methacrylate (BA), isobutyl methacrylate, *n-*amyl methacrylate, *n*-octyl methacrylate, glycidyl methacrylate (GMA) and the like). Copolymers derived from two or more of the forgoing types of monomers may also be used, as well as copolymers made by polymerizing one or more of the forgoing types of monomers with styrene, acrylonitrile, butadiene, isoprene, and the like. Part or all of the components in these copolymers should preferably have a glass transition temperature of not higher than 0°C. Preferred monomers for the preparation of a thermoplastic acrylic polymer toughening agent are methyl acrylate, *n*-propyl acrylate, isopropyl acrylate, *n*-butyl acrylate, *n*-hexyl acrylate, and *n-*octyl acrylate.

It is preferred that a thermoplastic acrylic polymer toughening agent have a core-shell structure. The core-shell structure is one in which the core portion preferably has a glass transition temperature of 0 °C or less, while the shell portion is preferably has a glass transition temperature higher than that of the core portion. The core portion may be grafted with silicone. The shell section may be grafted with a low surface energy substrate such as silicone, fluorine, and the like. An acrylic polymer with a core-shell structure that has low surface energy substrates grafted to the surface will aggregate with itself during or after mixing with the thermoplastic polyester and other components of the composition of the invention and can be easily uniformly dispersed in the composition.

Suitable toughening agents for polyamides are described in US Patent 4,174,358. Preferred toughening agents include polyolefins modified with a compatibilizing agent such as an acid anhydride, dicarboxylic acid or derivative thereof, carboxylic acid or derivative thereof, and/or an epoxy group. The compatibilizing agent may be introduced by grafting an unsaturated acid anhydride, dicarboxylic acid or derivative thereof, carboxylic acid or derivative thereof, and/or an epoxy group to a polyolefin. The compatibilizing agent may also be introduced while the polyolefin is being made by copolymerizing with monomers containing an unsaturated acid anhydride, dicarboxylic acid or derivative thereof, carboxylic acid or derivative thereof, and/or an epoxy group. The compatibilizing agent preferably contains from 3 to 20 carbon atoms. Examples of typical compounds that may be grafted to (or used as comonomers to make) a polyolefin are acrylic acid, methacrylic acid, maleic acid, fumaric acid, itaconic acid, crotonic acid, citraconic acid, maleic anhydride, itaconic anhydride, crotonic anhydride and citraconic anhydride.

Preferred toughening agents for polyacetals include thermoplastic polyurethanes, polyester polyether elastomers, other functionalized and/or grafted rubber, and polyolefins that contain polar groups that are either grafted to their backbones or were incorporated by copolymerizing with a monomer that contained one or more polar groups. Preferable comonomers are those that contain epoxide groups, such as glycidyl methacrylate. A preferred toughening agent is EBAGMA (a terpolymer derived from ethylene, butyl acrylate, and glycidyl methacrylate).

When used, the optional polymeric toughening agent will preferably be present in about 0.5 to about 25 volume percent, or more preferably in about 2 to about 20 volume percent, based on the total weight of the composition.

The compositions of this invention may optionally include one or more plasticizers, nucleating agents, flame retardants, flame retardant synergists, heat stabilizers, antioxidants, dyes, pigments, mold release agents, lubricants, UV stabilizers, (paint) adhesion promoters, and the like.

The compositions of the present invention, especially when containing thermoplastic, are preferably in the form of a melt-mixed or a solution-mixed blend, more preferably melt-mixed, wherein all of the polymeric components are well-dispersed within each other and all of the non-polymeric ingredients are homogeneously dispersed in and bound by the polymer matrix, such that the blend forms a unified whole. The blend may be obtained by combining the component material using anymelt-mixing method or by mixing components other than matrix polymer with monomers of the polymer matrix and then polymerizing the monomers. The component materials may be mixed to homogeneity using a melt-mixer such as a single or twin-screw extruder, blender, kneader. Banbury mixer, etc. to give a resin composition. Part of the materials may be mixed in a melt-mixer, and the rest of the materials may then be added and further melt-mixed until homogeneous. The sequence of mixing in the manufacture of the thermally conductive polymer resin composition of this invention may be such that individual components may be melted in one shot, or the filler and/or other components may be fed from a side feeder, and the like, as will be understood by those skilled in the art.

The composition of the present invention may be formed into articles using methods known to those skilled in the art, such as, for example, injection molding, blow molding, extrusion, press molding or transfer molding. The present compositions are especially useful in encapsulating electrical and/or electronic devices, sometimes forming in a sense metal/resin hybrids. Such articles can include those for use in motor housings, lamp housings, lamp housings in automobiles and other vehicles, electrical and electronic housings, insulation bobbin which exist between coiled wire and magnetic inducible metal core in stator of motors or generators and housings which substantially encapsulates the stator core of motors or generators. Examples of lamp housings in automobiles and other vehicles are front and rear lights, including headlights, tail lights, and brake lights, particularly those that use light-emitting diode (LED) lamps. The articles may serve as replacements for articles made from aluminum or other metals in many applications.

### Examples

### Compounding and Molding Methods

The polymeric compositions shown in Table 1 were prepared by compounding in a 32 mm Werner and Pfleiderer twin screw extruder. All ingredients were blended together and added to the rear of the extruder except that fibers were side-fed into a downstream barrel. Barrel temperatures were set at about 320°C.

The compositions were molded into ISO test specimens and on an injection molding machine for the measurement of CLTE and thermal conductivity. Melt temperature were about 325°C and mold temperatures were about 140°C,

### Testing methods

CLTE in mold flow direction (MD) and transverse direction (TD) were determined on about center portion of the IS0 bar in the temperature range from - 40 to 180 degree C using ASTM D696 method.

Thermal, conductivity was determines on gate side area of the ISO bar with a thickness of 4mm using Laser Flash Method as described in ASTM E1461. Results, are shown in Table 1.

The following terms are used in Table 1.
HTN-1 refers to Zytel® HTN501, a polyamide6TDT manufactured by E.I. du Pont de Nemours and Co., Wilmington, DE.
PA66 refers to Zytel® FE310036, a polyamide66 manufactured by E.I, du Pont de Nemours and Co., Wilmington, DE.
Modified-EPDM refers to EPDM (ethylene/propylene/diene polyolefin)grafted with maleic anhydride.
CaF₂ refers to Calcium fluoride powder with an average size 30 µm manufactured by Sankyo Seifun Co., Ltd.
Glass flake refers to glass flake FLEKA® REFG302 manufactured by Nippon Sheet Glass Co., Ltd.
Talc refers to talc KOSSAP® #10 that is surface modified with an amino-silane coupling agent manufactured by Nippon Talc Co., Ltd.
Wollastonite refers to 1% amino-silane coated on wollastonite fibers Nyglos®8 supplied from Nyco Minerals.
Glass fiber refers to FT756D glass fibers manufactured by Asahi Fiber Glass Co., Ltd.

**Table 1**

| | Ex. 1 | Ex. 2 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| HTN-1 | 36 | 36 | 36 | 33 | 36 | 36 | 36 | 36 |
| PA66 | 16 | 16 | 16 | 14 | 16 | 16 | 16 | 16 |
| Modified-EPDM | 3 | 3 | 3 | 3 | 3 | 3 | 3 | 3 |
| CaF2 | 35 | 25 | 45 | 50 | 25 | 35 | 25 | 35 |
| Glass flake | 10 | 20 | -- | -- | | | | -- |
| Talc | | | -- | -- | 20 | | | -- |
| Wollastonite | | | | | | 10 | 20 | |
| Glass fiber | | | | | | | | 10 |
| Melt Viscosity (Pa.s) | 107 | 133 | 185 | 230 | 285 | 179 | 149 | 104 |
| Thermal con ductivity (W/m°K) | 1.02 | 0.71 | 1.08 | 1.30 | 0.93 | 0.95 | 0.81 | 0.83 |
| CLTE in MD (ppm) | 41 | 33 | 57 | 50 | 48 | 39 | 30 | 30 |
| CLTE in TD (ppm) | 43 | 35 | 55 | 52 | 50 | 54 | 51 | 54 |
| CLTE in MD/ CLTE in TD | 0.95 | 0.94 | 1.04 | 0.96 | 0.96 | 0.72 | 0.59 | 0.56 |

| | | | | | | | | |
|---|---|---|---|---|---|---|---|---|
| All ingredient quantities are given in volume percent relative to the total weight of the composition. All compositions contain 1 weight part of terephthalic acid to 100 parts of total of HTN-1 and PA66. | | | | | | | | |

## Claims

1. A thermal conductive polymer composition, comprising:
(a)about 25 to about 75 volume percent of polymer (b) about 7 to about 65 volume percent of calcium fluoride.
(c)about 2 to about 50 volume percent of glass flake, and the volume ratio of (c) to (b) is between 10 to 90 and 70 to 30.
the percentages are based on the total volume of the composition.

2. The composition of claim 1 wherein the polymer is a thermoplastic polymer.

3. The composition of claim 2 wherein the polymer is at least one selected from the group consisting of polyester, polyamide and liquid crystalline polymer.

4. An article made from the composition of claim 1.

5. A metal/polymer hybrid article made with the composition of claim 1.

6. An insulator of a stator core of motors or generators made of the composition of claim 1.

7. A stator assembly encapsulated with the composition of claim 1.

8. The composition of claim 1 additionally comprising 0.01 to about 15 volume percent of at least one polymeric toughening agent.

9. The composition of claim 8 wherein the polymer is a thermoplastic polymer.

10. The composition of claim 9 wherein the polymer is at least one selected from the group consisting of polyester, polyamide and liquid crystalline polymer.

11. The composition of claim 8 wherein the polymeric toughening agent is present in about 2 to about 20 volume percent, based on the total weight of the composition.

12. An article made from the composition of claim 8.

13. A metal/polymer hybrid article made with the composition of claim 8.

14. An insulator of a stator core of motors or generators made of the composition of claim 8.

15. A stator assembly encapsulated with the composition of claim 8.

## Patentansprüche

1. Wärmeleitfähige Polymerzusammensetzung umfassend:
(a) 25 bis 75 Volumenprozent Polymer
(b) 7 bis 65 Volumenprozent Calciumfluorid
(c) 2 bis 50 Volumenprozent Glasflocke und wobei das Volumenverhältnis von (c) zu (b) zwischen 10 zu 90 und 70 zu 30 liegt
und die Prozentsätze auf das Gesamtvolumen der Zusammensetzung bezogen sind.

2. Zusammensetzung nach Anspruch 1, wobei das Polymer ein thermoplastisches Polymer ist.

3. Zusammensetzung nach Anspruch 2, wobei das Polymer mindestens eines ist ausgewählt aus der Gruppe bestehend aus Polyester, Polyamid und flüssigem kristallinem Polymer.

4. Artikel, der aus der Zusammensetzung nach Anspruch 1 hergestellt ist.

5. Metall-/Polymerhybridartikel, der aus der Zusammensetzung nach Anspruch 1 hergestellt ist.

6. Isolator eines Statorkerns von Motoren oder Lichtmaschinen, der aus der Zusammensetzung nach Anspruch 1 hergestellt ist.

7. Statorzusammenbau, der in der Zusammensetzung nach Anspruch 1 eingekapselt ist.

8. Zusammensetzung nach Anspruch 1, die zusätzlich
0,01 bis 15 Volumenprozent mindestens eines polymeren schlagfest machenden Mittels umfasst.

9. Zusammensetzung nach Anspruch 8, wobei das Polymer ein thermoplastisches Polymer ist.

10. Zusammensetzung nach Anspruch 9, wobei das Polymer mindestens eines ist ausgewählt aus der Gruppe bestehend aus Polyester, Polyamid und flüssigem kristallinem Polymer.

11. Zusammensetzung nach Anspruch 8, wobei das polymere schlagfest machende Mittel in einer Menge von 2 bis 20 Volumenprozent, auf das Gesamtgewicht der Zusammensetzung bezogen, vorliegt.

12. Artikel, der aus der Zusammensetzung nach Anspruch 8 hergestellt ist.

13. Metall-/Polymerhybridartikel, der aus der Zusammensetzung nach Anspruch 8 hergestellt ist.

14. Isolator eines Statorkerns von Motoren oder Lichtmaschinen, der aus der Zusammensetzung nach Anspruch 8 hergestellt ist.

15. Statorzusammenbau, der in der Zusammensetzung nach Anspruch 8 eingekapselt ist.

## Revendications

1. Composition polymère thermiquement conductrice comprenant:
(a) 25 à 75 pour cent en volume de polymère
(b) 7 à 65 pour cent en volume de fluorure de calcium
(c) 2 à 50 pour cent en volume de flocons de verre, et le rapport en volume de (c) sur (b) est compris entre 10 à 90 et 70 à 30.
les pourcentages sont basés sur le volume total de la composition.

2. Composition selon la revendication 1, dans laquelle le polymère est un polymère thermoplastique.

3. Composition selon la revendication 2, dans laquelle le polymère est au moins un polymère choisi parmi le groupe constitué du polyester, du polyamide et d'un polymère à cristaux liquides.

4. Article fabriqué à partir de la composition selon la revendication 1.

5. Article hybride type métal/polymère fabriqué avec la composition selon la revendication 1.

6. Diélectrique d'un noyau de stator de moteurs ou de générateurs fabriqué à partir de la composition selon la revendication 1.

7. Assemblage stator encapsulé avec la composition selon la revendication 1.

8. Composition selon la revendication 1, comprenant de manière supplémentaire 0,01 à 15 pour cent en volume d'au moins un agent rigidifiant polymère.

9. Composition selon la revendication 8, dans laquelle le polymère est un polymère thermoplastique.

10. Composition selon la revendication 9, dans laquelle le polymère est au moins un polymère choisi parmi le groupe constitué du polyester, du polyamide et d'un polymère à cristaux liquides.

11. Composition selon la revendication 8, dans laquelle l'agent rigidifiant polymère est présent en 2 à 20 pour cent en volume, sur la base du poids total de la composition.

12. Article fabriqué à partir de la composition selon la revendication 8.

13. Article hybride type métal/polymère fabriqué avec la composition selon la revendication 8.

14. Isolant d'un noyau de stator de moteurs ou de générateurs fabriqué à partir de la composition selon la revendication 8.

15. Assemblage stator encapsulé avec la composition selon la revendication 8.
